# EUROPÄISCHE PATENTSCHRIFT

(11) **EP 3 857 687 B1**
(45) Veröffentlichungstag und Bekanntmachung des Hinweises auf die Patenterteilung: **05.01.2022**
(21) Anmeldenummer: 19772678.9
(22) Anmeldetag: 16.09.2019
(51) Int. Cl.: H02K 11/20, G01R 31/34, H02K 11/35

(54) **ELEKTRISCHE MASCHINE MIT EINER VORRICHTUNG ZUR ÜBERWACHUNG DES ROTOR-WICKELKOPFES**
ELECTRIC MACHINE COMPRISING A DEVICE FOR MONITORING THE ROTOR WINDING HEAD
MACHINE ÉLECTRIQUE POURVUE D'UN DISPOSITIF DE SURVEILLANCE DE LA TÊTE BOBINÉE DU ROTOR

(30) Priorität: 27.09.2018 DE 102018123845
(43) Veröffentlichungstag der Anmeldung: 04.08.2021
(73) Patentinhaber: Voith Patent GmbH, 89522 Heidenheim (DE)
(72) Erfinder: FRANK, Achim, 89269 Illerberg-Vöhringen (DE); SCHWARZ, Babette, 89428 Syrgenstein (DE)
(74) Vertreter: Voith Patent GmbH - Patentabteilung
(86) Internationale Anmeldenummer: PCT/EP2019/074629
(87) Internationale Veröffentlichungsnummer: WO 2020/064386

(56) Entgegenhaltungen:
- EP-A1- 0 608 442
- EP-A1- 2 221 625
- EP-A2- 2 672 241
- JP-A- 2000 346 916

## Beschreibung

Die vorliegende Erfindung betrifft eine elektrische Maschine mit einem Rotor-Wickelkopf. Derartige Maschinen werden zum Beispiel in Kraftwerksanlagen wie Pumpspeicherkraftwerken eingesetzt. Hier kommen doppelt gespeiste Asynchronmaschinen im Leistungsbereich ab 20 MVA im drehzahlvariablen Betrieb zum Einsatz.

Die DE 10 2011 105 427 A1 offenbart eine elektrische Maschinen mit einer Vorrichtung die zur Überwachung des Rotor-Wickelkopfes geeignet ist. Dazu wird ein Leiter zum Leiten von Energie auf dem Wickelkopf aufgebracht. Die Vorrichtung umfasst fernen einen Detektor zum Erfassen des Energieflusses im Leiter. Die bekannte Lösung hat den Nachteil, dass eine Nachrüstung einer solchen Vorrichtung auf eine bestehende Maschine nicht ohne weiteres möglich ist.

Die JP 2000 3469 A offenbart eine elektrische Maschine mit einem Mikrowellen-Radarsystem. Die EP 0 608 442 A1 offenbart eine elektrische Maschine mit einer lanzenförmigen Sonde zur Messung des magnetischen Flusses im Luftspalt. Die EP 2 221 625 A1 behandelt die technische Ausführung von Sensor-Antennen zur Verwendung in einer elektrischen Maschine.

Die der vorliegenden Erfindung zugrunde liegende Aufgabe ist es, eine Vorrichtung anzugeben, welche einfach in eine bestehende Maschine integriert werden kann.

Die WO 2017/157679 A1 offenbart eine Vorrichtung zur Überwachung des Luftspaltes einer elektrischen Maschine unter Verwendung eines Mikrowellen-Radarsystems, welches leicht in eine bestehende Maschine integriert werden kann. Allerdings gibt die WO 2017/157679 A1 keinerlei Hinweise, wie die offenbarte Technologie zur Überwachung des Rotor-Wickelkopfes verwendet werden kann.

Die Erfinder haben sich die Aufgabe gestellt, die in der WO 2017/157679 A1 offenbarte Technologie so zu modifizieren, dass sie zur Überwachung des Rotor-Wickelkopfes verwendet werden kann.

Erfindungsgemäß wird diese Aufgabe durch eine elektrische Maschine mit den Merkmalen des unabhängigen Anspruchs 1 gelöst. Weitere vorteilhafte Ausgestaltungen ergeben sich aus den abhängigen Unteransprüchen.

Die erfindungsgemäße Lösung wird nachfolgend anhand von Figuren erläutert. Darin ist im Einzelnen folgendes dargestellt:
- Figur 1: Elektrische Maschine mit einer erfindungsgemäßen Vorrichtung zur Überwachung des Rotor-Wickelkopfes;
- Figur 2: Vergrößerter Ausschnitt aus der erfindungsgemäßen Vorrichtung gemäß Figur 1.

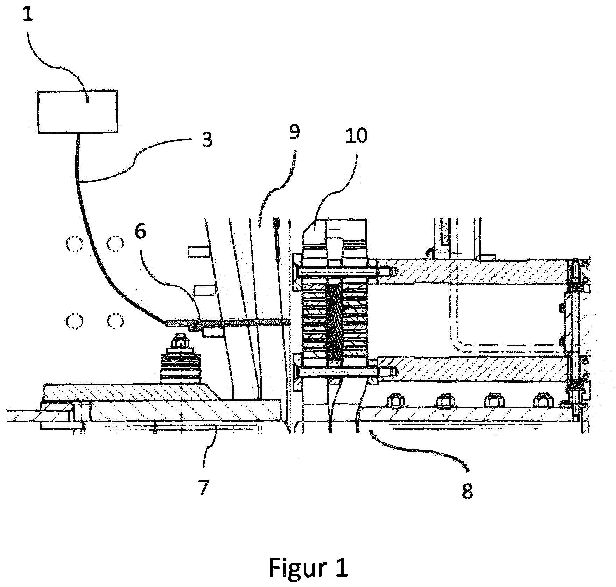

Figur 1 zeigt einen Ausschnitt aus einer elektrischen Maschine in einem Schnitt parallel zur Drehachse. Die elektrische Maschine umfasst einen Stator und einen Rotor. Der Stator umfasst ein Blechpaket, welches mit 7 bezeichnet ist. Der Rotor umfasst ein Blechpaket, welches mit 8 bezeichnet ist. Der Stator umfasst Wicklungselemente, welche sich in Nuten des Blechpaketes 7 befinden und deren Enden in axialer Richtung über das Blechpaket 7 hinausreichen und so den Stator-Wickelkopf bilden. Eines dieser Wicklungselemente ist mit 9 bezeichnet. In analoger weise umfasst der Rotor Wicklungselemente, welche sich in Nuten des Blechpaketes 8 befinden und deren Enden in axialer Richtung über das Blechpaket 8 hinausreichen und so den Rotor-Wickelkopf bilden. Eines dieser Wicklungselemente ist mit 10 bezeichnet. Die elektrische Maschine umfasst ferner eine Sende- und Empfangseinheit zur Aussendung und zum Empfang von Mikrowellen, welche mit 1 bezeichnet ist, und eine lanzenförmige Sonde, welche mit 6 bezeichnet ist. Die Sonde 6 ist mit einem Kabel, welches mit 3 bezeichnet ist, mit der Sende- und Empfangseinheit 1 verbunden. Die lanzenförmige Sonde 6 ist am Stator-Wickelkopf angeordnet, wobei sich die Längsachse der Sonde 6 in radialer Richtung erstreckt. Dabei befindet sich die Sonde 6 zwischen den Stator-Wicklungselementen 9, wobei das mit dem Kabel 3 verbundene Ende der Sonde 6 radial nach außen weist. In axialer Richtung ist die Sonde 6 so angeordnet, dass das sensitive Ende der Sonde 6 gegenüber von einem Teil eines Rotor-Wicklungselementes 10 liegt.

Es ist von Vorteil, wenn die Sonde 6 an bestehende Elemente der elektrischen Maschine befestigt werden kann. So ist in Figur 1 die Sonde 6 mit einem Support-Ring des Stator-Wickelkopfes verbunden. Insbesondere bei neu hergestellten elektrischen Maschinen können jedoch auch spezielle Halteeinrichtungen für die Sonde 6 vorgesehen sein.

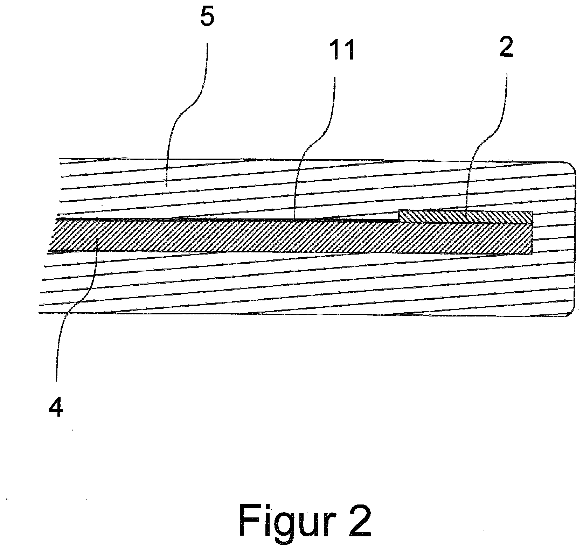

Figur 2 stellt einen vergrößerten Ausschnitt der Sonde 6 aus Figur 1 mit dem sensitiven Ende derselben dar. Die Sonde umfasst einen lanzenförmigen Träger, welcher mit 4 bezeichnet ist und aus unmagnetischen und nichtleitenden Materialien aufgebaut ist. Ein sehr gut geeignetes Material für den Träger 4 ist dabei Fiberglas. Es eigenen sich jedoch auch andere Materialien, wie z.B. Glasfaserverstärkter Kunststoff, Hartgewebe oder Holz. An dem Ende des Trägers 4, welches am sensitiven Ende der Sonde 6 angeordnet ist, befindet sich eine Antenne, welche mit 2 bezeichnet ist und welche mit dem Träger 4 verbunden ist. Die Verbindung kann dabei durch Kleben zustande kommen. Es kommen jedoch auch alle anderen geeigneten Verbindungsweisen in Frage. Zur Verbindung der Antenne 2 mit dem Kabel 3 erstrecken sich zischen der Antenne 2 und dem Kabel 3 elektrische Leiter, welche mit 11 bezeichnet sind und welche mit dem Träger 4 verbunden sind. Der Träger 4, die Antenne 2 und die elektrischen Leiter 11 sind von einer Spannungsisolation umgeben, welche mit 5 bezeichnet ist. Im Prinzip kann die Verbindung der Antenne 2 und der Leiter 11 mit dem Träger 4 allein durch die Spannungsisolation 5 bewirkt werden. Zur Vereinfachung der Fertigung der Sonde ist jedoch eine von der Spannungsisolation 5 unabhängige Befestigung der genannten Elemente an dem Träger 4 von Vorteil. Die Leiter 11 können auch beispielsweise aus auf den Träger 4 abgeschiedenen Kupferbahnen bestehen.

Mit Hilfe der beschriebenen Anordnung kann eine Verformung des Rotor-Wickelkopfes detektiert werden, welche zu einer Veränderung (in der Regel eine Verkleinerung) des Abstandes zwischen dem sensitiven Ende der Sonde und wenigstens einem Rotor-Wicklungselement führt.

Die beschriebene Vorrichtung kann leicht in einer bestehenden elektrischen Maschine nachgerüstet werden, da dazu einfach die lanzenförmige Sonde zwischen die Stator-Wicklungselemente im Bereich des Stator-Wickelkopfes geschoben und an bestehende Elemente des Stators befestigt werden kann. Der Stator-Wickelkopf ist von außen her leicht zugänglich. Die Spannungsisolation der Sonde schützt dieselbe vor der dort während dem Betrieb der elektrischen Maschine herrschenden elektrischen Spannung. Die Sende- und Empfangseinheit kann außen am Stator oder in der Nähe desselben angeordnet sein. Auch dadurch wird die Nachrüstung vereinfacht.

## Patentansprüche

1. Elektrische Maschine, umfassend einen Rotor mit einem Rotor-Blechpaket (8), einen Stator mit einem Stator-Blechpaket (7), wobei der Stator Wicklungselemente (9) umfasst, welche in Nuten des Stator-Blechpaketes (7) angeordnet sind und in axialer Richtung aus denselben herausragen und so den Stator-Wickelkopf bilden, und wobei der Rotor Wicklungselemente (10) umfasst, welche in Nuten des Rotor-Blechpaketes (8) angeordnet sind und in axialer Richtung aus denselben herausragen und so den Rotor-Wickelkopf bilden, und wobei die elektrische Maschine eine Vorrichtung zur Überwachung des Rotor-Wickelkopfes umfasst, **dadurch gekennzeichnet, dass** die Vorrichtung ein Mikrowellen-Radarsystem umfasst, welches eine Sende- und Empfangseinheit (1) zur Aussendung und zum Empfang von Mikrowellen, eine Sonde (6) und ein die Sonde (6) mit der Sende- und Empfangseinheit verbindendes Kabel (3) umfasst, wobei die Sonde (6) lanzenförmig ist, wobei die Längsachse der Sonde (6) in radialer Richtung angeordnet ist, und die Sonde (6) am Stator-Wickelkopf angeordnet ist, wobei sich die Sonde (6) zwischen den Stator-Wicklungselementen (9) erstreckt, und das mit dem Kabel (3) verbundene Ende der Sonde (6) radial nach außen weist, und die Sonde (6) ein sensitives Ende umfasst und in axialer Richtung so angeordnet ist, dass das sensitive Ende der Sonde (6) gegenüber von einem Teil eines Rotor-Wicklungselementes (10) angeordnet ist, wobei die Sonde (6) einen lanzenförmigen Träger (4), eine Antenne (2) und elektrische Leiter (11) umfasst, wobei der Träger (4) aus unmagnetischen und nichtleitenden Materialien aufgebaut ist, und die Antenne (2) am sensitiven Ende der Sonde angeordnet und mit dem Träger (4) verbunden ist, und die elektrischen Leiter (11) die Antenne (2) mit dem Kabel (3) verbinden und mit dem Träger (4) verbunden sind, und die Sonde (6) eine Spannungsisolation (5) umfasst, welche den Träger (4), die Antenne (2) und die Leiter (11) umgibt, so dass eine Verformung des Rotor-Wickelkopfes detektiert werden kann.

2. Elektrische Maschine nach Anspruch 1, wobei der Träger (4) aus Fiberglas besteht.

3. Elektrische Maschine nach Anspruch 1, wobei der Träger (4) aus Glasfaserverstärktem Kunststoff besteht.

4. Elektrische Maschine nach Anspruch 1, wobei der Träger (4) aus Hartgewebe besteht.

5. Elektrische Maschine nach Anspruch 1, wobei der Träger (4) aus Holz besteht.

6. Elektrische Maschine nach einem der Ansprüche 1 bis 5, wobei die Leiter (11) aus auf dem Träger (4) abgeschiedenem Kuper bestehen.

7. Elektrische Maschine nach einem der Ansprüche 1 bis 6, wobei die Sende- und Empfangseinheit (1) außen am Stator angeordnet ist.

8. Elektrische Maschine nach einem der Ansprüche 1 bis 7, wobei die Sonde (6) mit einem Support-Ring des Stator-Wickelkopfes verbunden ist.

9. Elektrische Maschine nach einem der Ansprüche 1 bis 7, wobei die Sonde (6) mit einer eigens dafür vorgesehen Halterung verbunden ist

10. Elektrische Maschine nach einem der Ansprüche 1 bis 9, wobei die elektrische Maschine eine doppelt gespeiste Asynchronmaschine ist.

11. Elektrische Maschine nach Anspruch 10, wobei die elektrische Maschine wenigstens eine Leistung von 20 MVA aufweist.

## Claims

1. An electric machine comprising a rotor with a rotor laminated core (8), a stator with a stator laminated core (7), wherein the stator comprises winding elements (9) which are arranged in grooves of the stator laminated core (7) and protrude therefrom in axial direction and thus form the stator winding head, and wherein the rotor comprises winding elements (10) which are arranged in grooves of the rotor laminated core (8) and project axially therefrom, thus forming the rotor winding head, and wherein the electrical machine comprises a device for monitoring the rotor winding head, **characterized in that** the device comprises a microwave radar system comprising a transmitting and receiving unit (1) for transmitting and receiving microwaves, a probe (6) and a cable (3) connecting the probe (6) to the transmitting and receiving unit, the probe (6) being lance-shaped, the longitudinal axis of the probe (6) being arranged in the radial direction and the probe (6) is arranged on the stator winding head, the probe (6) extending between the stator winding elements (9), and the end of the probe (6) connected to the cable (3) facing radially outwards, and the probe (6) comprising a sensitive end and being arranged in the axial direction such that that the sensitive end of the probe (6) is arranged opposite from a part of a rotor winding element (10), wherein the probe (6) comprises a lance-shaped carrier (4), an antenna (2) and electrical conductors (11), wherein the carrier (4) is constructed of non-magnetic and non-conductive materials, and the antenna (2) is arranged at the sensitive end of the probe and is connected to the carrier (4), and the electrical conductors (11) connect the antenna (2) to the cable (3) and are connected to the carrier (4) and the probe (6) comprises a voltage insulation (5) surrounding the carrier (4), the antenna (2) and the conductors (11), so that a deformation of the rotor winding head can be detected.

2. Electrical machine according to claim 1, wherein the support (4) is made of fiberglass.

3. Electrical machine according to claim 1, wherein the support (4) is made of glass fiber reinforced plastic.

4. Electrical machine according to claim 1, wherein the support (4) is made of hard fabric.

5. Electric machine according to claim 1, wherein the support (4) is made of wood.

6. Electrical machine according to any one of claims 1 to 5, wherein the conductors (11) consist of copper deposited on the carrier (4).

7. Electric machine according to any one of claims 1 to 6, wherein the transmitting and receiving unit (1) is arranged on the outside of the stator.

8. An electrical machine according to any one of claims 1 to 7, wherein the probe (6) is connected to a support ring of the stator winding head.

9. Electrical machine according to any one of claims 1 to 7, wherein the probe (6) is connected to a holder provided specifically for this purpose

10. An electric machine according to any one of claims 1 to 9, wherein the electric machine is a doubly-fed asynchronous machine.

11. The electric machine of claim 10, wherein the electric machine has at least a power rating of 20 MVA.

## Revendications

1. Machine électrique, comprenant un rotor avec un paquet de tôles de rotor (8), un stator avec un paquet de tôles de stator (7), le stator comprenant des éléments d'enroulement (9) qui sont disposés dans des encoches du paquet de tôles de stator (7) et font saillie de celles-ci dans la direction axiale et forment ainsi la tête d'enroulement de stator, et le rotor comprenant des éléments d'enroulement (10) qui sont disposés dans des encoches du paquet de tôles de rotor (8) et font saillie de celles-ci dans la direction axiale et forment ainsi la tête d'enroulement de rotor, et la machine électrique comprenant un dispositif de surveillance de la tête d'enroulement du rotor, **caractérisée en ce que** le dispositif comprend un système radar à micro-ondes qui comprend une unité d'émission et de réception (1) pour l'émission et la réception de micro-ondes, une sonde (6) et un câble (3) reliant la sonde (6) à l'unité d'émission et de réception, la sonde (6) étant en forme de lance, l'axe longitudinal de la sonde (6) étant disposé dans la direction radiale, et la sonde (6) est disposée sur la tête d'enroulement du stator, la sonde (6) s'étendant entre les éléments d'enroulement du stator (9), et l'extrémité de la sonde (6) reliée au câble (3) est dirigée radialement vers l'extérieur, et la sonde (6) comprend une extrémité sensible et est disposée dans la direction axiale de telle sorte, de sorte que l'extrémité sensible de la sonde (6) est disposée en face d'une partie d'un élément d'enroulement de rotor (10), la sonde (6) comprenant un support en forme de lance (4), une antenne (2) et des conducteurs électriques (11), le support (4) étant constitué de matériaux non magnétiques et non conducteurs, et l'antenne (2) étant disposée à l'extrémité sensible de la sonde et reliée au support (4), et les conducteurs électriques (11) reliant l'antenne (2) au câble (3) et étant reliés au support (4), et la sonde (6) comprend une isolation de tension (5) qui entoure le support (4), l'antenne (2) et les conducteurs (11), de sorte qu'une déformation de la tête d'enroulement du rotor peut être détectée.

2. Machine électrique selon la revendication 1, dans laquelle le support (4) est en fibre de verre.

3. Machine électrique selon la revendication 1, dans laquelle le support (4) est constitué d'une matière plastique renforcée par des fibres de verre.

4. Machine électrique selon la revendication 1, dans laquelle le support (4) est constitué de tissu dur.

5. Machine électrique selon la revendication 1, dans laquelle le support (4) est en bois.

6. Machine électrique selon l'une quelconque des revendications 1 à 5, dans laquelle les conducteurs (11) sont constitués de cuivre déposé sur le support (4).

7. Machine électrique selon l'une des revendications 1 à 6, dans laquelle l'unité d'émission et de réception (1) est disposée à l'extérieur du stator.

8. Machine électrique selon l'une des revendications 1 à 7, dans laquelle la sonde (6) est reliée à un anneau de support de la tête de bobinage du stator.

9. Machine électrique selon l'une des revendications 1 à 7, dans laquelle la sonde (6) est reliée à un support prévu à cet effet.

10. Machine électrique selon l'une quelconque des revendications 1 à 9, dans laquelle la machine électrique est une machine asynchrone à double alimentation.

11. Machine électrique selon la revendication 10, dans laquelle la machine électrique a une puissance d'au moins 20 MVA.
